# EUROPEAN PATENT SPECIFICATION

(11) **EP 3 206 918 B1**
(45) Date of publication and mention of the grant of the patent: **21.11.2018**
(21) Application number: 15788520.3
(22) Date of filing: 16.10.2015
(51) Int. Cl.: B60S 1/40

(54) **WINDSCREEN WIPER DEVICE**
SCHEIBENWISCHERVORRICHTUNG
DISPOSITIF D'ESSUIE-GLACE

(30) Priority: 17.10.2014 US 201462065340 P
(43) Date of publication of application: 23.08.2017
(73) Proprietor: Federal-Mogul Motorparts LLC, Southfield, MI 48034 (US)
(72) Inventor: YOUNG, William D. III, Waterford, MI 48329 (US); COX, Dennis E., Belleville, MI 48111 (US)
(74) Representative: Hooiveld, Arjen Jan Winfried
(86) International application number: PCT/US2015/055970
(87) International publication number: WO 2016/061474

(56) References cited:
- DE-U1-202012 102 614
- US-A1- 2013 104 334
- US-A1- 2014 259 504

## Description

### CROSS REFERENCE TO RELATED APPLICATION

This Patent Application claims the benefit of and priority to U.S. Provisional Patent Application Serial No. 62/065,340 filed October 17, 2014, and U.S. Utility Patent Application No. 14/885,395, filed October 16, 2015.

### BACKGROUND OF THE INVENTION

### 1. Technical Field

This invention relates generally windscreen wiper devices and more particularly to connecting devices for attaching windscreen wiper devices to oscillating wiper arms.

### 2. Related Art

Passenger vehicles are provided with any one of a range of different styles of oscillating wiper arms including, for example, various sizes of pin-style wiper arms, bayonet-style wiper arms, and top lock-style wiper arms. These oscillating arms are of such different shapes and configurations that they must be secured with windscreen wiper devices in very different manners. This leads to increased manufacturing costs since the windscreen wiper device must design and test differently configured connecting devices for attachment with the various shapes and sizes of oscillating arms.

Other windscreen wiper devices include connecting devices with a single base and multiple joint parts which are each configured for attachment with different sizes and styles of oscillating arms. The joint part attached to the base must be chosen depending upon which type of oscillating arm the windscreen wiper device is to be attached.

US patent publication no. US2014/259504 discloses a windscreen wiper device according to the preamble of claim 1.

### SUMMARY OF THE INVENTION AND ADVANTAGES

One aspect of the present invention provides for a windscreen wiper device. The windscreen wiper device includes a longitudinally extending wiper blade of a flexible material for sealing against a windshield. The carrier element operably supports the wiper blade and operably biases the wiper blade into a pre-curved shape. A two-piece connecting device is provided for attachment with a wiper arm. The connecting device includes a base which is secured with at least one of the carrier element and the wiper blade. The connecting device further includes a joint part which is pivotally attached with the base and is made as a single integral piece. The joint part has a main body portion which extends between opposite longitudinal ends and a front nose portion which is connected with one longitudinal end of the main body portion via a living hinge for allowing the front nose portion to pivot relative to the main body portion. The joint part further includes a pair of rear locking lugs which extend from the longitudinal end of the main body portion opposite of the front nose portion. The main body portion of the joint part has a top surface with a resilient tab formed therein. The resilient tab has a button with a stepped surface that faces longitudinally towards the front nose portion and presents three vertically and longitudinally spaced tiers for lockingly connecting the joint part with differently sized oscillating arms.

The windscreen wiper device is advantageous for both original equipment and aftermarket applications. For original equipment applications, the windscreen wiper device allows for manufacturing cost savings by allowing the windscreen wiper device manufacturer to utilize a single connecting device with a range of different styles and sizes of oscillating arms. These same manufacturing cost savings also apply in the aftermarket, but in the aftermarket, packaging cost savings are also realized because the windscreen wiper blade manufacturer can sell the same product in the same package for a range of vehicles with different styles and sizes of oscillating wiper arms.

### BRIEF DESCRIPTION OF THE DRAWINGS

These and other aspects, features and advantages of the invention will become more readily appreciated when considered in connection with the following detailed description of presently preferred embodiments and best mode, appended claims and accompanying drawings, in which:
Figure 1 is a perspective and partially exploded view of an exemplary embodiment of a windscreen wiper device;
Figure 2 is a cross-sectional view of the windscreen wiper device taken along Line 2-2 of Figure 1;
Figure 3 is an exploded view of a connecting device of the windscreen wiper device of Figure 1;
Figure 4 is a perspective view of a joint part of the connecting device of Figure 3;
Figure 5 is an enlarged view of a portion of the joint part of Figure 4;
Figure 6 is a top elevation view of the joint part of Figure 4;
Figure 7 is an elevation view showing connecting device of Figure 3 in connection with a side pin-style oscillating arm;
Figure 8 is a side and fragmentary view showing the joint part of Figure 4 during a process of attaching the joint part with a top lock style oscillating arm or a top lock with window style oscillating arm;
Figure 9 is an enlarged view of a portion of Figure 8;
Figure 10 is a perspective and fragmentary view of a top lock with window style oscillating arm in connection with the connecting device of Figure 3;
Figure 11 is a perspective and fragmentary view of a top lock style oscillating arm in connection with the connecting device of Figure 3;
Figure 12 is a perspective and fragmentary view of a 22 mm bayonet-style oscillating arm in connection with the connecting device of Figure 3; and
Figure 13 is a perspective and fragmentary view of a 19 mm bayonet-style oscillating arm in connection with the connecting device of Figure 3.

### DETAILED DESCRIPTION OF PRESENTLY PREFERRED EMBODIMENTS

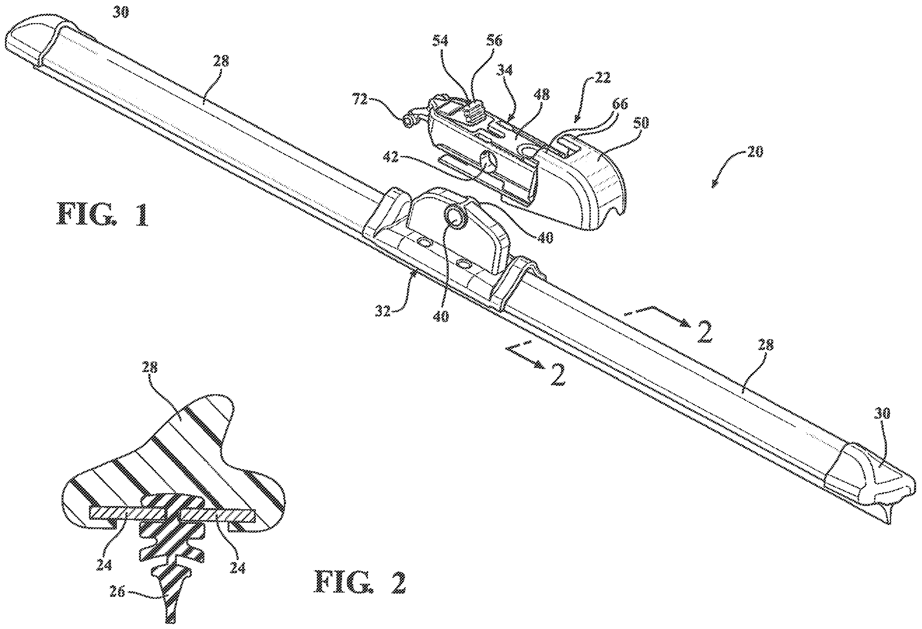

Referring to the Figures, wherein like numerals indicate corresponding parts throughout the several views, an exemplary embodiment of a windscreen wiper device **20** with a connecting device **22** that is configured for attachment with a range of different sizes and styles of oscillating wiper arms is generally shown in Figure 1. Specifically, the connecting device **22** is adapted for attachment with the following styles and sizes of oscillating wiper arms: 19 mm bayonet-style, 22 mm bayonet-style, 19 mm pin-style, 22 mm pin-style, top lock-style and top lock with window-style. The connecting device **22** is configured for attachment with any of these different sizes and styles of wiper arms without any add-on or interchangeable parts, which allows for manufacturing cost savings for original equipment applications through economies of scale. As shown in Figures 1 and 2, the exemplary windscreen wiper device **20** is a beam-style wiper device in that it includes a longitudinally extending carrier element **24** which biases a wiper blade **26** (sometimes also known as a wiper strip or a wiper element) of a flexible material (for example, rubber) into a pre-curved shape maintaining a fluid-tight seal along the longitudinal length of the wiper blade against a curved windshield as the windscreen wiper device **20** oscillates back and forth on the curved windshield. The windscreen wiper device **20** also has a pair of subspoilers **28** which are disposed on opposite longitudinal sides of the connecting device **22** and which extend between the connecting device **22** and respective end caps **30** for applying a downforce on the wiper blade to improve the seal between the wiper blade **26** and the windshield when the vehicle is travelling at speed.

Referring now to Figure 1, the connecting device **22** is composed of two pieces including a base **32** piece and a joint part **34** piece. The base **32** and the joint part **34** are each preferably made of single pieces of injection molded plastic. Subsequently, the base **32** and joint part **34** are pivotally joined together to allow the joint part **34** to pivot relative to the base **32** about a pivot axis. The base **32** is preferably secured in a non-removable manner to the carrier element **24** (shown in Figure 2) and/or to the wiper blade **26**.

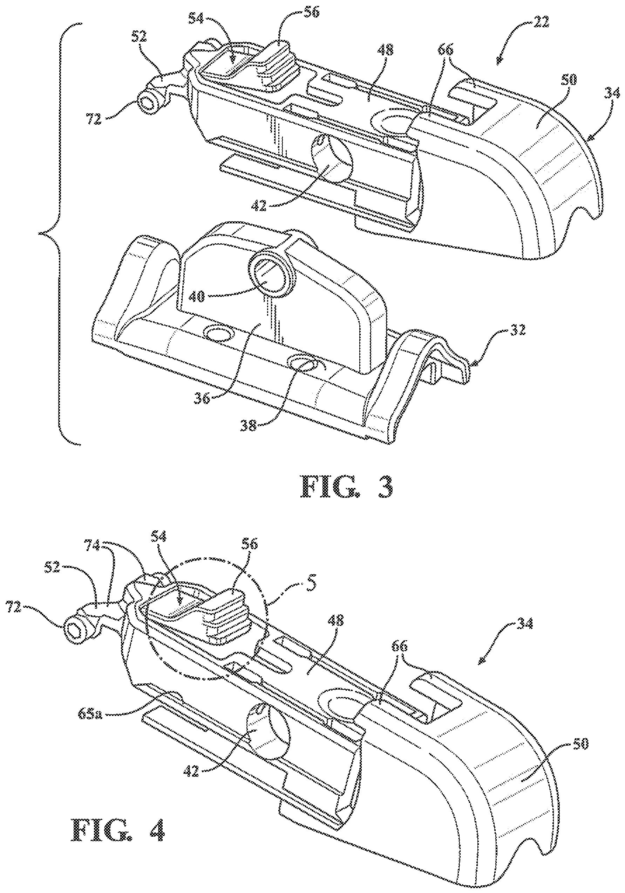

As shown in Figure 3, the base **32** includes a pair of laterally spaced and vertically extending walls **36** which extend upwardly from a bottom surface **38**, and each of the vertical walls **36** has a protrusion **40** which projects laterally therefrom. The protrusions **40** are both generally circular in shape, extend in opposite lateral directions and are aligned with one another. The protrusions **40** of the exemplary embodiment are generally tubular in shape and have coaxial through holes such that each protrusion **40** has an outer bearing surface and an inner bearing surface. The joint part **34** is provided with a pair of coaxial openings **42** which are shaped similarly to the protrusions **40** for receiving the protrusions **40** to establish the pivotal connection between the joint part **34** and the base **32**. The coaxial through holes of the protrusions **40** and the coaxial openings **42** on the joint part **34** allow the connecting device **22** to be mated with a side-pin style wiper arm **44** by inserting a pin (not shown) through the co-axial through holes. When the side-pin style wiper arm **44** is properly connected with the connecting device **22**, a flange on the wiper arm **44** wraps around the joint part **34** to prevent unintentional detachment of the connecting device **22** from the wiper arm **44**. Although not shown, it should be appreciated that the joint part could alternately be formed with only one opening for receiving one of the protrusions and with a recess for receiving the other protrusion to establish the pivotal connection between the base and the joint part.

Referring now to Figure 4, the exemplary embodiment of the joint part **34** is divided longitudinally into three portions: a main body portion **48**, a front nose portion **50** and a rear lug portion **52**. The main body portion **48** is generally U-shaped when viewed in cross-section and presents a top wall and a pair of laterally spaced sidewalk, and the aforementioned openings are located on the sidewalls.

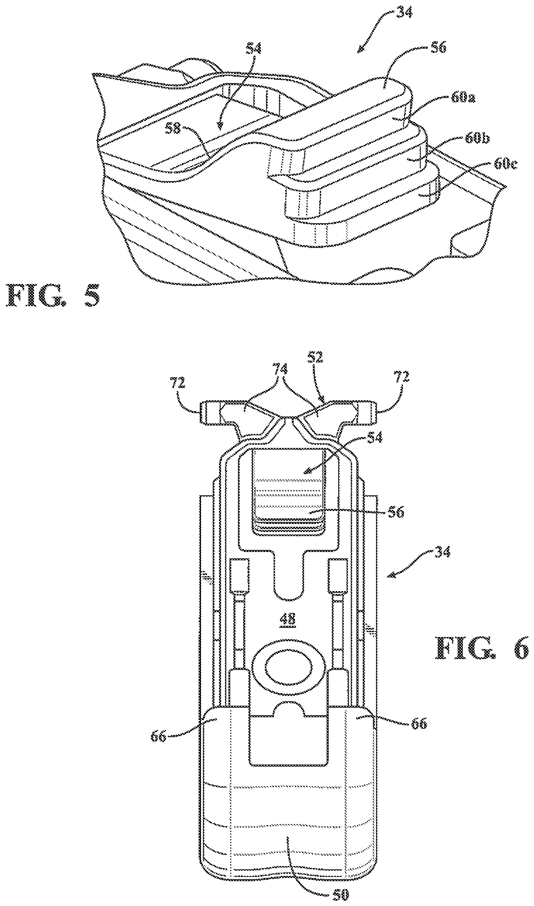

As shown in Figure 6, the top wall of the main body portion **48** includes a resilient, or spring loaded tongue **54** which is integrally connected with the top wall at a first living hinge which is positioned adjacent the rear lug portion **52** of the joint part **34**. The tongue **54** extends longitudinally from the first living hinge towards the pivot axis and the front nose portion **50**. The tongue **54** includes a button **56** which is spaced from the integral hinge adjacent a front edge of the tongue **54** and which projects vertically upwardly for engaging within correspondingly shaped windows in the bayonet-style and top lock with window-style wiper arms. As shown in Figure 5, the tongue **54** has a back surface **58** which faces away from the pivot axis and which is ramped for facilitating the connection of the joint part **54** with the bayonet-style wiper arms. Specifically, the ramped back surface **58** of the button **56** causes the tongue **54** to resiliently flex downwardly at the first living hinge when a front edge the bayonet-style wiper arm makes contact with the ramped back surface **58**. The button **56** automatically springs outwardly into its resting position when it encounters the window in the respective bayonet-style wiper arm.

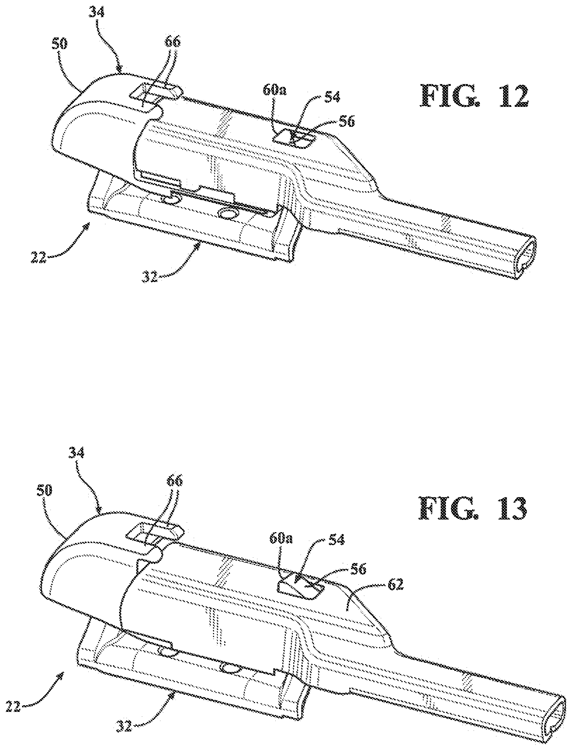

Referring still to Figure 5, the front surface of the button **56** is stepped to present three distinct vertically and longitudinally spaced tiers **60a**, **60b**, **60c** which are shaped like steps and which face towards the pivot axis. Two of the three tiers **60a**, **60b**, **60c** are specifically positioned relative to one another and to the front nose portion **52** of the joint part **34** for engaging with a front edges of the windows of differently sized bayonet-style wiper arms. Specifically, as shown in Figure **12**, the top tier **60a** of the button 56 is configured for engaging with the window of the 19 mm bayonet-style wiper arm **62**. The middle tier **60b** of the button **56** is positioned for engaging with the window of the 22 mm bayonet-style wiper arm **62**, as shown in Figure 13, and the bottom tier **60c** (shown in Figure 5) is positioned to function as a secondary stop for the window of the 22 mm bayonet style wiper arm **64**. In other words, the bottom tier **60c** is a backup safety feature to prevent unintentional detachment of the wiper device from the 22 mm bayonet-style wiper arm **64**.

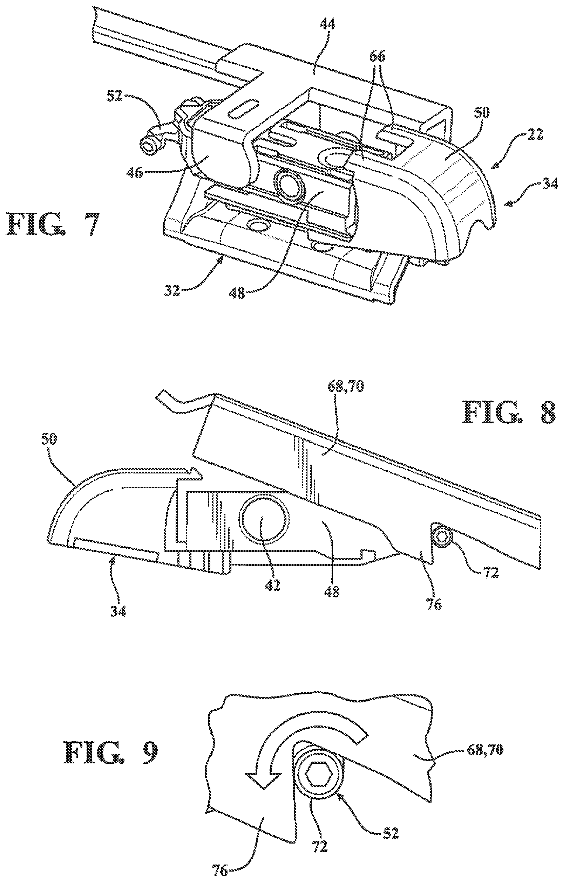

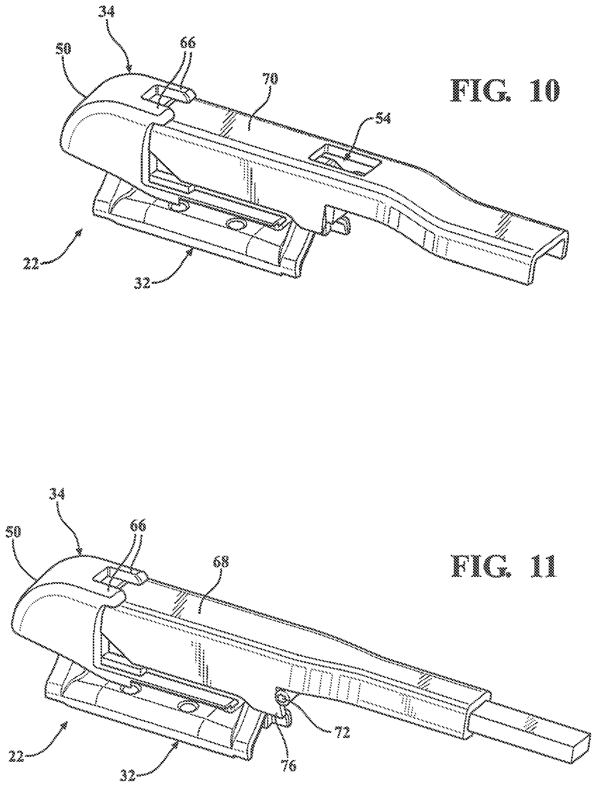

Referring back to Figure 4, at the lower ends of the sidewalls of the main body portion **48**, the joint part includes a pair of vertically spaced rails **65a**, **65b** which extend laterally outwardly. The lower rail **65b** is configured to engage with a lower flange of the 22 mm bayonet-style wiper arm **62** (as shown in Figure 13), and the upper rail **65a** is configured to engage with a lower flange of a 19 mm bayonet-style wiper arm (as shown in Figure 7). Additionally, the upper rail **65a** is positioned for supporting a lower edge of the top lock with window and top lock-style wiper arms **68**, **66**, as shown in Figures 10 and 11 respectively.

The 19 mm bayonet-style wiper arm **62** and the 22 mm bayonet-style wiper arm **64** may be detached from the joint part **34** by pressing the button **56** downwardly through the window in the respective wiper arm **62**, **64** and sliding the windscreen wiper device **20** away from the wiper arm **62**, **64**.

The front nose portion **50** of the joint part **34** is located at one longitudinal end of the main body portion **48** and is spaced longitudinally from the pivot axis. The front nose portion 50 includes a pair of fingers **66** which extend longitudinally from an upper surface of the front nose portion **50** for releasably engaging with a front edge of top lock-style **68** (shown in Figure 11) and top lock with window-style wiper arms **70** (shown in Figure 10). The front nose portion **50** is connected to the main body portion **48** at a lower end of the front nose portion **50** via a second living hinge which allows the front nose portion **50** to flex forwardly and backwardly for releasably locking the fingers **66** with the top surface of the respective wiper arm. The front nose portion **50** also includes a U-shaped recess between the fingers **66** for allowing passage of a projection that extends forwardly from the front edges of the top lock-style and top lock with window-style wiper arms **68**, **70**.

Referring now to Figure 4, the rear lug portion **52** of the joint part **34** includes a pair of generally cylindrical lugs **72** which are spaced longitudinally from the back end of the main body portion **48** and extend away from one another in opposite lateral directions. The cylindrical lugs **72** are solidly (i.e., non-resiliently) connected with the main body portion **48** via bridge sections **74** which are integrally connected with the main body portion **48**.

Referring now to Figures 8-11, connecting the joint part **34** with either the top lock-style wiper arm **68** or the top lock with window-style wiper arm **70** involves angling the joint part **34** and the respective wiper arm **68**, **70** relative to one another. Next, the cylindrical lugs 72 on the joint part **34** are engaged with back legs **76** of the respective wiper arm. Then, the joint part **34** and wiper arm **68**, **70** are pivoted relative to one another about the cylindrical lugs **72** until the fingers 66 on the from nose portion **50** spring into a locking engagement with a front edge of the wiper arm **68**, **70**. The round outer surfaces of the cylindrical lugs **72** smoothen the pivoting of the wiper arm **68**, **70** and joint part **34** relative to one another during this connection process.

Disconnecting the top lock-style wiper arm **68** or the top lock with window-style wiper arm **70** from the joint part **34** involves urging the front nose portion **50** forwardly to disengage the fingers 66 on the front nose portion **50** from the wiper arm **68**, **70**. The joint part 34 and wiper arm **68**, **70** may then be pivoted relative to one another in the reverse direction from the installation. During both the installation and the detachment processes, the cylindrical lugs **72** remain in their respective positions and do not resiliently move.

Obviously, many modifications and variations of the present invention are possible in light of the above teachings. It is, therefore, to be understood that within the scope of the appended claims, the invention may be practiced otherwise than as specifically described.

## Claims

1. A windscreen wiper device (20), comprising:
a longitudinally extending wiper blade (26) of a flexible material for sealing against a windshield;
a carrier element (24) operably supporting said wiper blade (26) and operatively biasing said wiper blade (26) into a pre-curved shape;
a two-piece connecting device (22) including a base (32) and an joint part (34) for attachment with an oscillating wiper arm;
said base (32) being secured with at least one of said carrier element (24) and said wiper blade (26);
said joint part (34) being pivotally attached with said base (32) and being of a single integral piece;
said joint part (34) including a main body portion (48) extending between opposite longitudinal ends **characterized in that** said joint part (34) includes a front nose portion (50) connected with one longitudinal end of said main body portion (48) via a living hinge for allowing said front nose portion (50) to pivot relative to said main body portion (48) and a pair of rear locking lugs (52) extending from said longitudinal end of said main body portion (48) opposite of said front nose portion (50);
said main body portion (48) of said joint part (34) having a top surface with a resilient tab (54) formed therein and said resilient tab (54) having a button (56) with a stepped surface facing longitudinally towards said front nose portion (50) of said joint part (34) and presenting three vertically and longitudinally spaced tiers (60a, 60b, 60c) for lockingly connecting said joint part (34) with differently sized wiper arms.

2. The windscreen wiper device (20) as set forth in claim 1, wherein said rear locking lugs (52) of said joint part (34) are generally cylindrical in shape.

3. The windscreen wiper device (20) as we forth in claim 1, wherein said base (32) has a pair of protrusions (40) and wherein said main body portion (48) of said joint part (34) has a pair of laterally spaced apart sidewalls and wherein said sidewalls have coaxial openings (42) which receive said protrusions (40) to allow said joint part (34) to pivot relative to said base (32).

4. The windscreen wiper device (20) as set forth in claim 3, wherein at least one of said protrusions (40) on said base (32) has a through hole for receiving a side pin of a pin-style wiper arm (44).

5. The windscreen wiper device (20) as set forth in claim 3, wherein said front nose portion (50) includes a pair of locking fingers (66) which extend longitudinally towards said main body portion (48) for lockingly engaging an upper surface of an oscillating wiper arm (68,70).

6. The windscreen wiper device (20) as set forth in claim 5, wherein said locking fingers (66) on said front nose portion (50) are spaced laterally from one another on opposite sides of a U-shaped slot which faces towards said main body portion (48) of said joint part (34).

7. The windscreen wiper device (20) as set forth in claim 1, wherein said resilient tab (54) is interconnected with said top surface of said main body portion (48) adjacent said rear locking lugs (52).

8. The windscreen wiper device (20) as set forth in claim 1, wherein said button (56) has a ramped surface on an opposite side of said three tiers (60a, 60b, 60c).

9. The windscreen wiper device (20) as set forth in claim 1, wherein said base (32) and joint part (34)are each made of single integral pieces.

## Patentansprüche

1. Scheibenwischervorrichtung (20), umfassend:
ein sich in Längsrichtung erstreckendes Wischerblatt (26) aus einem flexiblen Material zum Abdichten gegen eine Windschutzscheibe;
ein Trägerelement (24), das das Wischerblatt (26) funktionsfähig trägt und das Wischerblatt (26) in eine vorgebogene Form vorspannt;
eine zweiteilige Verbindungsvorrichtung (22) mit einer Fassung (32) und einem Gelenkteil (34) zur Befestigung mit einem oszillierenden Wischerarm;
wobei die Fassung (32) mit mindestens einem der Trägerelemente (24) und dem Wischerblatt (26) gesichert ist;
wobei das Gelenkteil (34) schwenkbar mit der Fassung (32) angebracht ist und aus einem einzigen integralen Teil besteht;
wobei das Gelenkteil (34) einen Hauptkörperabschnitt (48) beinhaltet, der sich zwischen gegenüberliegenden Längsenden erstreckt, **dadurch gekennzeichnet, dass** der Gelenkteil (34) einen vorderen Nasenabschnitt (50) beinhaltet, der mit einem Längsende des Hauptkörperabschnitts (48) über ein Filmscharnier verbunden ist, um zu ermöglichen, dass der vordere Nasenabschnitt (50) relativ zu dem Hauptkörperabschnitt (48) schwenkbar ist, und ein Paar hintere Verriegelungslaschen (52), die sich von dem Längsende des Hauptkörperabschnitts (48) gegenüber dem vorderen Nasenabschnitt (50) erstrecken;
wobei der Hauptkörperabschnitt (48) des Gelenkteils (34) eine Oberseite mit einer darin ausgebildeten elastischen Lasche (54) aufweist und die elastische Lasche (54) eine Taste (56) mit einer abgestuften Oberfläche aufweist, die in Längsrichtung zum vorderen Nasenabschnitt (50) des Gelenkteils (34) zeigt und drei vertikal und längs beabstandete Zwischenräume (60a, 60b, 60c) zum verriegelnden Verbinden des Gelenkteils (34) mit unterschiedlich großen Wischerarmen aufweist.

2. Scheibenwischervorrichtung (20) nach Anspruch 1, wobei die hinteren Verriegelungslaschen (52) des Gelenkteils (34) im Allgemeinen eine zylindrische Form aufweisen.

3. Scheibenwischervorrichtung (20) nach Anspruch 1, wobei die Fassung (32) ein Paar Vorsprünge (40) aufweist und wobei der Hauptkörperabschnitt (48) des Gelenkteils (34) ein Paar seitlich beabstandete Seitenwände aufweist und wobei die Seitenwände koaxiale Öffnungen (42) aufweisen, die die Vorsprünge (40) aufnehmen, so dass der Gelenkteil (34) relativ zur Fassung (32) schwenkbar ist.

4. Scheibenwischervorrichtung (20) nach Anspruch 3, wobei mindestens einer der Vorsprünge (40) auf der Fassung (32) ein Durchlassloch zur Aufnahme eines Querstiftes eines stiftartigen Wischerarms (44) aufweist.

5. Scheibenwischervorrichtung (20) nach Anspruch 3, wobei der vordere Nasenabschnitt (50) ein Paar Verriegelungsklauen (66) beinhaltet, die sich in Längsrichtung in Richtung des Hauptkörperabschnitts (48) erstrecken, um mit einer Oberseite eines oszillierenden Wischerarms (68, 70) in Eingriff zu kommen.

6. Scheibenwischervorrichtung (20) nach Anspruch 5, wobei die Verriegelungsklauen (66) an dem vorderen Nasenabschnitt (50) seitlich voneinander beabstandet sind, auf gegenüberliegenden Seiten eines U-förmigen Schlitzes, der dem Hauptkörperabschnitt (48) des Gelenkteils (34) zugewandt ist.

7. Scheibenwischervorrichtung (20) nach Anspruch 1, wobei die elastische Lasche (54) mit der Oberseite des Hauptkörperabschnitts (48) benachbart zu den hinteren Verriegelungslaschen (52) verbunden ist.

8. Scheibenwischervorrichtung (20) nach Anspruch 1, wobei die Taste (56) eine geriffelte Oberfläche auf einer gegenüberliegenden Seite der drei Zwischenräume (60a, 60b, 60c) aufweist.

9. Scheibenwischervorrichtung (20) nach Anspruch 1, wobei die Fassung (32) und das Gelenkteil (34) jeweils aus einzelnen integralen Teilen bestehen.

## Revendications

1. Dispositif de balai d'essuie-glace (20), comprenant :
une lame de balai qui s'étend de manière longitudinale (26) réalisée dans un matériau souple, destinée à plaquer contre un pare-brise ;
un élément porteur (24) qui supporte de manière opérationnelle ladite lame de balai (26), et qui sollicite de manière opérationnelle ladite lame de balai (26) en une forme pré-incurvée ;
un dispositif de connexion en deux parties (22) qui comprend une base (32) et une partie jonction (34), destiné à une connexion avec un bras de balai oscillant ;
ladite base (32) étant fixée sur l'un au moins dudit élément porteur (24) et de ladite lame de balai (26) ;
ladite partie jonction (34) étant fixée de manière pivotante sur ladite base (32) et étant réalisée d'une seule pièce ;
ladite partie jonction (34) comprenant une partie corps principal (48) qui s'étend entre les extrémités longitudinales opposées, **caractérisé en ce que** ladite partie jonction (34) comprend une partie nez avant (50) connectée à une extrémité longitudinale de ladite partie corps principal (48) par l'intermédiaire d'une charnière fonctionnelle de façon à permettre à ladite partie nez avant (50) de pivoter par rapport à ladite partie corps principal (48), et une paire de tenons de verrouillage arrière (52) qui s'étendent à partir de ladite extrémité longitudinale de ladite partie corps principal (48) opposée à ladite partie nez avant (50) ;
ladite partie corps principal (48) de ladite partie jonction (34) présentant une surface supérieure avec une patte élastique (54) formée à l'intérieur, et ladite patte élastique (54) présentant un bouton (56) avec une surface étagée qui fait face de manière longitudinale à ladite partie nez avant (50) de ladite partie jonction (34), et présentant trois étages espacés de manière verticale et longitudinale (60a, 60b, 60c) destinés à connecter de manière verrouillable ladite partie jonction (34) et des bras de balai de tailles différentes.

2. Dispositif de balai d'essuie-glace (20) selon la revendication 1, dans lequel lesdits tenons de verrouillage arrière (52) de ladite partie jonction (34), présentent de manière générale une forme cylindrique.

3. Dispositif de balai d'essuie-glace (20) selon la revendication 1, dans lequel ladite base (32) présente une paire de saillies (40), et dans lequel ladite partie corps principal (48) de ladite partie jonction (34), présente une paire de parois latérales espacées de manière latérale, et dans lequel lesdites parois latérales présentent des ouvertures coaxiales (42) qui reçoivent lesdites saillies (40) de façon à permettre à la partie jonction (34) de pivoter par rapport à ladite base (32).

4. Dispositif de balai d'essuie-glace (20) selon la revendication 3, dans lequel l'une au moins desdites saillies (40) située sur ladite base (32), présente un trou traversant destiné à recevoir une broche latérale d'un bras de balai du type à broche (44).

5. Dispositif de balai d'essuie-glace (20) selon la revendication 3, dans lequel ladite partie nez avant (50) comprend une paire de doigts de verrouillage (66) qui s'étendent de manière longitudinale vers ladite partie corps principal (48), destinés à venir en prise de manière verrouillable avec la surface supérieure d'un bras de balai oscillant (68, 70).

6. Dispositif de balai d'essuie-glace (20) selon la revendication 5, dans lequel lesdits doigts de verrouillage (66) situés sur ladite partie nez avant (50), sont espacés de manière latérale les uns des autres sur les côtés opposés d'une fente en forme de U qui fait face à ladite partie corps principal (48) de ladite partie jonction (34).

7. Dispositif de balai d'essuie-glace (20) selon la revendication 1, dans lequel ladite patte élastique (54) est interconnectée avec ladite surface supérieure de ladite partie corps principal (48) adjacente auxdits tenons de verrouillage arrière (52).

8. Dispositif de balai d'essuie-glace (20) selon la revendication 1, dans lequel ledit bouton (56) présente une surface en rampe sur un bord opposé desdits trois étages (60a, 60b, 60c).

9. Dispositif de balai d'essuie-glace (20) selon la revendication 1, dans lequel ladite base (32) et ladite partie jonction (34) sont réalisées chacune d'une seule pièce.
